# EUROPEAN PATENT SPECIFICATION

(11) **EP 4 546 610 B1**
(45) Date of publication and mention of the grant of the patent: **06.08.2025**
(21) Application number: 23205086.4
(22) Date of filing: 23.10.2023
(51) Int. Cl.: H02J 50/00, B65G 43/02, H02J 50/27, H02J 50/40

(54) **CONVEYOR BAND SURFACE CONDITION MONITORING SYSTEM**
SYSTEM ZUR ÜBERWACHUNG DES OBERFLÄCHENZUSTANDS EINES FÖRDERBANDES
SYSTÈME DE SURVEILLANCE DE L'ÉTAT DE LA SURFACE D'UNE BANDE TRANSPORTEUSE

(43) Date of publication of application: 30.04.2025
(73) Proprietor: Valstybinis Moksliniu Tyrimu Institutas Fiziniu Ir Technologijos Mokslu Centras, 02300 Vilnius (LT)
(72) Inventor: Simniskis, Rimantas, Vilnius (LT); Kancleris, Zilvinas, Vilnius (LT); Ragulis, Paulius, Vilnius (LT); Zemgulyte, Justina, Vilnius (LT); Trusovas, Romualdas, Vilnius (LT); Ratautas, Karolis, Vilnius (LT)
(74) Representative: Pakeniene, Ausra

(56) References cited:
- WO-A2-2012/071198
- US-A1- 2016 103 084
- US-A1- 2018 241 251
- US-A1- 2022 069 754

## Description

### TECHNICAL FIELD

The invention relates to a product conveyor band surface condition monitoring system for uninterruptable conveyor band operation in a harsh environment.

### BACKGROUND ART

A wide variety of sensors are utilized to monitor and control state of a conveyor surface. Especially, condition of a conveyor surface should meet specific hygienic norms and technological requirements set for the food industry. Warmed chemical detergents are usually used for the conveyor's surface washing, and thereafter they are rinsed on the go. On the one hand, penetration of acidic and alkaline substrates from the conveyor's surface to the products is not tolerated. On the other hand, electronic equipment for monitoring conveyor conditions should be protected from the harsh environment.

Wireless communication is commonly used to transfer data from moving sensors to data collection hubs. The power supply of sensors using changeable or rechargeable batteries is generally not acceptable since changing batteries or their charging calls for interruption of technological processes, losses in production, and additional time consumption.

Energy harvesting, energy storing, and supplying to conveyor surface condition monitoring system integrated into a moving conveyor band allows avoiding the application of changeable batteries and improves the productivity of a conveyor. Different energy harvesting systems are proposed for a variety of applications like systems with wireless sensors, room condition monitoring systems, and different energy harvesting methods in conveyors.

US patent application, publication No.: US20180139517 discloses a building's wireless sensor system, where temperature, humidity, etc. sensors distributed in different places of the building are charged by radio frequency (RF) energy harvesters, which accumulate energy of electromagnetic field transmitted from data hubs emitting RF waves. The main disadvantage of the disclosed system is that the proposed RF energy harvesters are not suitable for moving applications.

International patent application, publication No.: WO2015019106, discloses an RF energy harvester for stationary systems, where a used rectenna is a 3D structure. The thickness of the rectenna is λ/4.8, where λ is the wavelength of the RF source in free space. In the case of standard Wi-Fi working at 2.45 GHz frequency, λ/4.8 is 25 mm. The proposed 3D antenna cannot be applied as an energy harvester for electronics embedded in a moving conveyor band.

European patent application, publication No.: EP2643244, discloses energy-harvesting conveyor belts and methods for power supply by harvesting ambient RF energy for electronic units installed in such conveyor belts. Disclosed transmitting antennas are coils of transmitters closely located to a conveyor belt, where the harvester receiver coils are embedded in a conveyor band. Such technology is widely used in RFID applications working at close distances and low RF carrier frequencies. The disclosed method and system limit dimensions of products that can be transported by a conveyor band and are not suitable to operate at microwave frequencies when the receiver and emitter are substantially apart from each other.

The present invention is dedicated to overcoming the above shortcomings and producing further advantages over prior art.

### BRIEF DESCRIPTION OF THE INVENTION

According to the invention, the conveyor band surface condition monitoring system comprises at least one energy harvesting segment of a segmented conveyor band comprising integrated electronics and various sensors, integrated into at least one segment of the conveyor band. In another instance, the sensors may be attached to the surface of the segment of the segmented conveyor band. The system further comprises a wireless data hub. The data hub is such that operates on standard frequencies above 1 GHz and communicates with distributed data nodes of the energy harvesting segments.

The integrated electronics of the energy harvesting segment comprises an array of microwave energy harvesting cells, an energy storage monitoring unit, and a data processing node. The array of microwave energy harvesting cells is an array of flat antennas with microwave rectifiers and capacitors. Depending on the type and destination of the sensors at least one sensor is either encapsulated into the body of the energy harvesting segment or mounted on its surface facing the wireless data hub when the harvesting segment is moving at the upper part of the conveyor band between the wireless data hub and lower part of a conveyor band.

The various sensors for example are sensors used for control of dosing of detergents and rinsing liquids, temperature, humidity, and other parameters of the surface of the segment of the conveyor band. In the present invention, the data hub plays a twofold role. On the one hand, it provides communication with nodes integrated into the conveyor band, and, on the other hand, radiates microwave energy, serving as an energy source for sensors and electronic circuitry encapsulated into the energy harvesting segment of the segmented conveyor band. The conveyor band surface condition monitoring system provides permanent control of the conveyor band's surface condition and avoids the interruptions of technological processes required for battery replacements or recharging.

### BRIEF DESCRIPTION OF THE DRAWINGS

Features of the invention believed to be novel and inventive are set forth with particularity in the appended claims. The invention itself, however, may be best understood by reference to the following detailed description of the invention, which describes exemplary embodiments, given in non-restrictive examples, of the invention, taken in conjunction with the accompanying drawings, in which:
Fig. 1 shows segmented conveyor band condition monitoring system.
Fig. 2 shows energy harvesting segment of the segmented conveyor band comprising sensors and a wireless data node.
Fig. 3 shows examples of RF energy harvesting cells: a) split ring, b) loop, c) dipole, d) split rectangular.

Preferred embodiments of the invention will be described herein below with reference to the drawings. Each figure contains the same numbering for the same or equivalent element.

### DETAILED DESCRIPTION OF THE INVENTION

It should be understood that numerous specific details are presented in order to provide a complete and comprehensible description of the invention's embodiment. However, the person skilled in the art will understand that the embodiment examples do not limit the application of the invention, which can be implemented without these specific instructions. Well-known methods, procedures, and components have not been described in detail for the embodiment to avoid being misleading. Furthermore, this description should not be considered to constrain the invention to the given embodiment examples but only as one of the possible implementations of the invention.

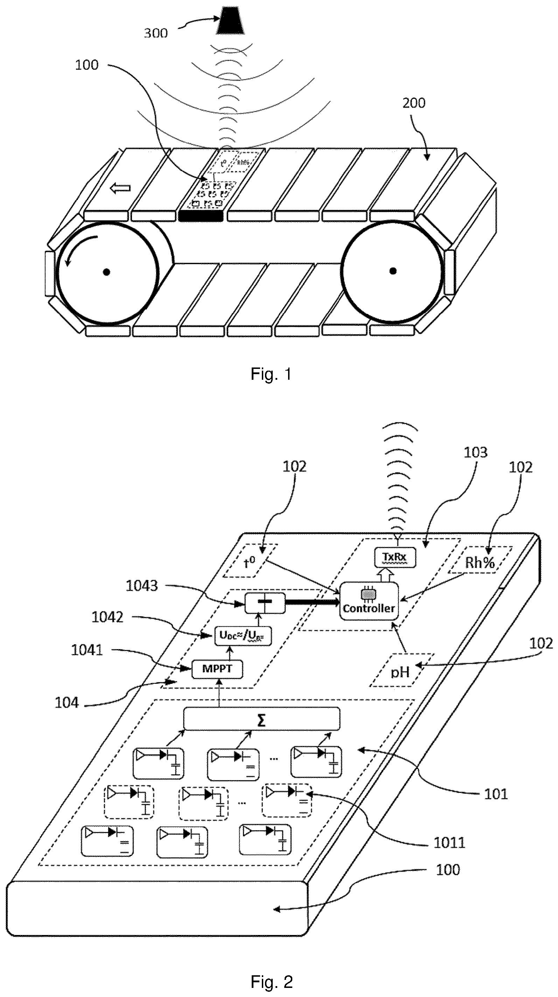

The invention is a conveyor band surface condition monitoring system, as shown in Fig. 1, comprising an energy harvesting segment (100) of a segmented conveyor band (200) and a wireless data hub (300). The energy harvesting segment (100), as shown in Fig. 2, comprises integrated electronics comprising an array (101) of microwave energy harvesting cells (1011), an energy storage monitoring unit (104), and a data processing node (103) all being encapsulated in the energy harvesting segment (100). Depending on type and destination, at least one sensor (102) is either encapsulated into the body of the energy harvesting segment (100) or mounted on its surface facing the data hub (300) when the energy harvesting segment (100) is moving at the upper part of the conveyor band (200) between the wireless data hub (300) and lower part of the conveyor band (200).

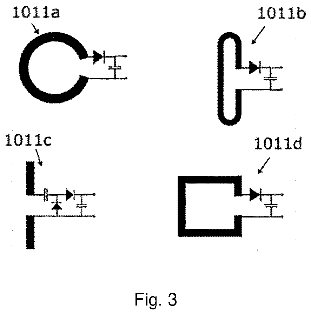

The array (101) of microwave energy harvesting cells (1011) is an array of flat antennas with microwave rectifiers and capacitors as variants (1011a, 1011b, 1011c, 1011d) presented in Fig. 3. Each harvesting cell can be a split ring (1011a), loop (1011b), dipole (1011c), split rectangular (1011d), etc., or another 2D antenna configuration. A flat antenna is connected to a rectifier and capacitor as shown in Fig. 3.

The data hub (300), operating on standard frequencies above 1 GHz can communicate with distributed data nodes of special segments (100) installed in conveyor band in the location of few meters.

The microwave energy is radiated from the data hub (300), is received by the harvesting cells (1011), rectified by microwave diodes, and stored in the capacitors of the cells. The DC energy stored in the capacitors of the cells (1011) is added up and delivered to the energy storage and monitoring unit (104). To increase the microwave radiation power density and effectiveness of microwave energy harvesting, the data hub (300) is located as close as possible to the harvesting array (101). Depending on the directivity of the data hub (300) energy harvesting can be effectively provided at a distance of a few meters. Because the voltage of energy stored in the harvesting array (101) depends on the power density of microwave radiation and working conditions, the energy storage monitoring unit (104) is applied to stabilize the DC voltage and ensure the best efficiency of microwave energy conversion and storage. The harvested energy storing and monitoring unit (104) comprises a maximum power point tracking (MPPT) device (1041), a voltage booster with stabilizer (1042), and a supercapacitor (1043), which collects and stores the overall energy from harvesting cells from the harvesting array (101). The energy stored in the supercapacitor (1043) of the storage monitor unit (104) supplies power to the electronic circuitry of sensors (102) and the data processing node (103). The data processing node (103) is a wireless transceiver that collects signals from the sensors (102), processes the data, and transmits it to the data hub (300).

The data collection hub (300) is a device such as a Wi-Fi router, a Zig-Bee, a Bluetooth, or other wireless communication transceiver operating on 2.45 GHz, 5 GHz, etc., or other microwave frequencies. The data hub (300) performs a twofold task: first, it communicates with the data node (103); second, it supports the power supply for electronic circuitry installed in the conveyor's energy harvesting segment (100), as shown in Fig. 2.

The abovementioned configuration of the conveyor band (200) surface monitoring system provides high protection from harsh environmental conditions and can autonomously and reliably operate without regular service.

The production conveyor condition monitoring system, which is proposed in the invention, ensures improved productivity of the conveyer, reduces the costs of service, and improves the reliability of the production process.

Although numerous characteristics and advantages, together with structural details and features, have been listed in the present description of the invention, the description is provided as an example of its fulfilment. Without departing from the principles of the invention, there may be changes in the details, especially in the form, size, and layout, in accordance with the most widely understood meanings of the concepts and definitions used in the claims.

## Claims

1. A conveyor band surface condition monitoring system comprising a microwave frequency energy emitter and a microwave frequency energy receiver **characterised in that** the microwave frequency energy emitter is a data hub (300) and the microwave frequency energy receiver is a conveyor band (200) energy harvesting segment (100) comprising integrated electronics comprising an array (101) of microwave energy harvesting cells (1011), an energy storage monitoring unit (104), a data processing node (103) and at least one sensor (102).

2. The conveyor band surface condition monitoring system according to claim 1, where the array (101) of microwave energy harvesting cells (1011) is an array of flat antennas (1011a, 1011b, 1011c, 1011d) comprising microwave rectifiers and capacitors.

3. The conveyor band surface condition monitoring system according to claim 2, where each harvesting cell is such as a split ring (1011a), or a loop (1011b), or a dipole (1011c), or a split rectangular (1011d).

4. The conveyor band surface condition monitoring system according to any one of the previous claims, where the energy storage monitoring unit (104) comprises a maximum power point tracking (MPPT) device (1041), a voltage booster with stabilizer (1042), and a supercapacitor (1043).

5. The conveyor band surface condition monitoring system according to any one of the previous claims, where the array (101) of microwave energy harvesting cells (1011), the energy storage monitoring unit (104), the data processing node (103), and the at least one sensor (102) are encapsulated in the conveyor band (200) energy harvesting segment (100).

6. The conveyor band surface condition monitoring system according to any one of claims 1-4, where the array (101) of microwave energy harvesting cells (1011), the energy storage monitoring unit (104), the data processing node (103), and the at least one sensor (102) are disposed on the surface energy harvesting segment (100) of the conveyor band (200).

7. A method for monitoring conveyor band surface condition using a system of any one of claims 1 - 6, **characterised in that** microwave energy radiated from a data hub (300) and harvested by harvesting cells (1011) is rectified by microwave diodes and stored in capacitors of the harvesting cells (1011), where DC energy stored in the capacitors of the cells (1011) is added up and delivered to energy storage and monitoring unit (104) for stabilizing the DC voltage.

## Patentansprüche

1. System zum Überwachen eines Zustands einer Förderbandoberfläche, das einen Mikrowellenfrequenzenergiesender und einen Mikrowellenfrequenzenergieempfänger umfasst, **dadurch gekennzeichnet, dass** der Mikrowellenfrequenzenergiesender ein Daten-Hub (300) ist und der Mikrowellenfrequenzenergieempfänger ein Energiegewinnungssegment (100) eines Förderbands (200) ist, das eine integrierte Elektronik, die eine Anordnung (101) von Mikrowellenenergiegewinnungszellen (1011) umfasst, eine Energiespeicherüberwachungseinheit (104), einen Datenverarbeitungsknoten (103) und zumindest einen Sensor (102) umfasst.

2. System zum Überwachen eines Zustands einer Förderbandoberfläche nach Anspruch 1, wobei die Anordnung (101) von Mikrowellenenergiegewinnungszellen (1011) eine Anordnung von Flachantennen (1011a, 1011b, 1011c, 1011d) ist, die Mikrowellengleichrichter und -kondensatoren umfassen.

3. System zum Überwachen eines Zustands einer Förderbandoberfläche nach Anspruch 2, wobei jede Gewinnungszelle wie ein Spaltring (1011a) oder eine Schleife (1011b) oder ein Dipol (1011c) oder ein Spaltrechteck (1011d) ist.

4. System zum Überwachen eines Zustands einer Förderbandoberfläche nach einem der vorstehenden Ansprüche, wobei die Energiespeicherüberwachungseinheit (104) eine Vorrichtung (1041) für Maximum Power Point Tracking (MPPT), einen Spannungsverstärker mit Stabilisator (1042) und einen Superkondensator (1043) umfasst.

5. System zum Überwachen eines Zustands einer Förderbandoberfläche nach einem der vorstehenden Ansprüche, wobei die Anordnung (101) von Mikrowellenenergiegewinnungszellen (1011), die Energiespeicherüberwachungseinheit (104), der Datenverarbeitungsknoten (103) und der zumindest eine Sensor (102) in dem Energiegewinnungssegment (100) des Förderbands (200) ummantelt sind.

6. System zum Überwachen eines Zustands einer Förderbandoberfläche nach einem der Ansprüche 1 bis 4, wobei die Anordnung (101) von Mikrowellenenergiegewinnungszellen (1011), die Energiespeicherüberwachungseinheit (104), der Datenverarbeitungsknoten (103) und der zumindest eine Sensor (102) an dem Oberflächenenergiegewinnungssegment (100) des Förderbands (200) angeordnet sind.

7. Verfahren zum Überwachen eines Zustands einer Förderbandoberfläche unter Verwendung eines Systems nach einem der Ansprüche 1 bis 6, **dadurch gekennzeichnet, dass** die Mikrowellenenergie, die von einem Daten-Hub (300) abgestrahlt und von Gewinnungszellen (1011) gewonnen wird, von Mikrowellendioden gleichgerichtet und in Kondensatoren der Gewinnungszellen (1011) gespeichert wird, wobei DC-Energie, die in den Kondensatoren der Zellen (1011) gespeichert ist, aufsummiert und zu der Energiespeicher- und Energieüberwachungseinheit (104) gespeist wird, um die Gleichspannung zu stabilisieren.

## Revendications

1. Système de surveillance de l'état de surface d'une bande transporteuse comprenant un émetteur d'énergie à micro-ondes et un récepteur d'énergie à micro-ondes, **caractérisé en ce que** l'émetteur d'énergie à micro-ondes est un hub de données (300) et le récepteur d'énergie à micro-ondes est un segment de récupération d'énergie (100) de bande transporteuse (200) comprenant une électronique intégrée comprenant un réseau (101) de cellules de récupération d'énergie à micro-ondes (1011), une unité de surveillance de stockage d'énergie (104), un nœud de traitement de données (103) et au moins un capteur (102).

2. Système de surveillance de l'état de surface d'une bande transporteuse selon la revendication 1, dans lequel le réseau (101) de cellules de récupération d'énergie à micro-ondes (1011) est un réseau d'antennes plates (1011a, 1011b, 1011c, 1011d) comprenant des redresseurs et des condensateurs à micro-ondes.

3. Système de surveillance de l'état de surface d'une bande transporteuse selon la revendication 2, dans lequel chaque cellule de récupération est telle qu'un anneau fendu (1011a), ou une boucle (1011b), ou un dipôle (1011c), ou un rectangle fendu (1011d).

4. Système de surveillance de l'état de surface d'une bande transporteuse selon l'une quelconque des revendications précédentes, dans lequel l'unité de surveillance de stockage d'énergie (104) comprend un dispositif de suivi du point de puissance maximale (MPPT) (1041), un survolteur avec stabilisateur (1042) et un supercondensateur (1043).

5. Système de surveillance de l'état de surface d'une bande transporteuse selon l'une quelconque des revendications précédentes, dans lequel le réseau (101) de cellules de récupération d'énergie à micro-ondes (1011), l'unité de surveillance de stockage d'énergie (104), le nœud de traitement de données (103) et l'au moins un capteur (102) sont encapsulés dans le segment de récupération d'énergie (100) de la bande transporteuse (200).

6. Système de surveillance de l'état de surface d'une bande transporteuse selon l'une quelconque des revendications 1 à 4, dans lequel le réseau (101) de cellules de récupération d'énergie à micro-ondes (1011), l'unité de surveillance de stockage d'énergie (104), le nœud de traitement de données (103) et l'au moins un capteur (102) sont disposés sur le segment de récupération d'énergie de surface (100) de la bande transporteuse (200).

7. Procédé de surveillance de l'état de surface d'une bande transporteuse utilisant un système selon l'une quelconque des revendications 1 à 6, **caractérisé en ce que** l'énergie à micro-ondes rayonnée à partir d'un hub de données (300) et récupérée par des cellules de récupération (1011) est redressée par des diodes à micro-ondes et stockée dans des condensateurs des cellules de récupération (1011), où l'énergie CC stockée dans les condensateurs des cellules (1011) est additionnée et délivrée à l'unité de stockage et de surveillance **d'énergie** (104) pour stabiliser la tension CC.
